(19) Europäisches Patentamt
European Patent Office
Office européen des brevets

(11) **EP 3 065 247 B1**

(12) **EUROPÄISCHE PATENTSCHRIFT**

(45) Veröffentlichungstag und Bekanntmachung des Hinweises auf die Patenterteilung:
**10.05.2017 Patentblatt 2017/19**

(51) Int Cl.:
*H02J 3/01* (2006.01)  *H02M 1/12* (2006.01)

(21) Anmeldenummer: **15157778.0**

(22) Anmeldetag: **05.03.2015**

(54) **Passives Filter für Wechselstrom-Oberschwingungen und Verzerrungen**

Passiv filter for AC noise

Filtre passif pour réseau AC perturbé

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**07.09.2016 Patentblatt 2016/36**

(73) Patentinhaber: **"Condensator Dominit" Dr. Christian Dresel Gesellschaft für Leistungselektronik, Energietechnik und Netzqualität mbH 59929 Brilon (DE)**

(72) Erfinder:
• **Dresel, Christian 59929 Brilon (DE)**
• **Kuhnhenne, Oliver 59929 Brilon (DE)**
• **Post, Hans-Gerd 59929 Brilon (DE)**

• **Reese, Jürgen 59929 Brilon (DE)**

(74) Vertreter: **Götz, Georg Alois Intellectual Property IP-GÖTZ Patent- und Rechtsanwälte Am Literaturhaus, Königstrasse 70 90402 Nürnberg (DE)**

(56) Entgegenhaltungen:
**DE-A1-102012 216 266    US-A- 5 406 437 US-A1- 2005 024 131    US-A1- 2012 182 089**

• **LAI L L ET AL: "APPLICATION OF NEURAL NETWORKS TO PREDICTING HARMONICS", EPE '95: 6TH. EUROPEAN CONFERENCE ON POWER ELECTRONICS AND APPLICATIONS. SEVILLA, SEPT. 19 - 21, 1995; [EUROPEAN CONFERENCE ON POWER ELECTRONICS AND APPLICATIONS], BRUSSELS, EPE ASSOCIATION, B, Bd. 3, 19. September 1995 (1995-09-19), Seiten 3.533-3.538, XP000538365,**

**Beschreibung**

Die Erfindung betrifft ein Verfahren zum Betrieb eines passiven Wechselstrom-Oberschwingungs-Filters, welches dazu dient, Verzerrungen und/oder Oberschwingungen bzw. Harmonische einer Grundfrequenz in elektrischen Energieverteilnetzen zu reduzieren oder zu begrenzen. Bei diesem Verfahren wird mittels Dimensionierung einer Induktivität und einer Kapazität und gegebenenfalls einer oder mehrerer Widerstände des Filters dessen Abstimmfrequenz und/oder Impedanz eingestellt. Unter "Abstimmfrequenz" werden vorliegend auch eine Übergangs-, Resonanz-, Eck-, Grenz- oder Eigenfrequenz des Filters verstanden. Ferner betrifft die Erfindung ein passives Wechselstrom-Oberschwingung-Filter bzw. eine entsprechende Schaltungsanordnung zur Filterung von Wechselstrom-Oberschwingungen insbesondere zur Durchführung des vorgenannten Verfahrens. Die Schaltungsanordnung umfasst induktive und kapazitive und gegebenenfalls ohmsche Komponenten bzw. Elemente, über deren Dimensionierung eine bestimmte Abstimmfrequenz eingestellt ist.

Hintergrund der Erfindung

Oberschwingungen

Nichtlineare Verbraucher, wie z.B. Frequenzumrichter oder Schaltnetzteile, entnehmen den Strom aus dem Netz nicht sinusförmig. Dies wirkt auf das Elektroenergieversorgungsnetz so, als wären sie Stromquellen, die ganzzahlige Vielfache des Grundschwingungsstroms einspeisen, die als "Oberschwingungen" oder "Harmonische" bezeichnet werden. Diese höherfrequenten Ströme speisen gegen die vorliegende Netzimpedanz ein und verursachen Verzerrungen der Netzspannung. Primär belasten die Oberschwingungsströme das Netz über das technisch notwendige Maß hinaus dadurch, dass Leistungsschalter, Transformatoren, Leitungen usw. mehr Strom führen müssen als spezifiziert. Sekundär führen die Oberschwingungsströme dazu, dass die Netzspannung verzerrt wird. Ein Maß für die Verzerrung der Netzspannung ist der THDU (Total Harmonic Distortion Voltage). Dieser Wert ist die geometrische Summe der Oberschwingungsspannungspegel Un/U1 mit der ganzzahligen Ordnungszahl n der Oberschwingungsspannung Un und der Grundschwingungsspannung U1:

$$THDU = \sqrt{\sum_{n=2}^{n} \left(\frac{Un}{U1}\right)^2}$$

Bei einer Verzerrung der Netzspannung können Geräte beschädigt werden. Die Lieferanten von Maschinen und Anlagen sind im Allgemeinen aus ihrer Gewährleistungspflicht entlassen, falls die Verzerrung höher liegt, als die in der EN 61000-2-4 festgelegten Verträglichkeitspegel, da das Netz nicht mehr die Kriterien erfüllt, die der Hersteller einer Maschine spezifiziert hat.

Filtermaßnahmen

Um die Netze von unnötigen Strombelastungen zu entlasten und Spannungspegel zu erreichen, die innerhalb zulässiger normativer Grenzen liegen, sind eine Vielzahl von Maßnahmen mit elektrischen Filtern bekannt, die im Regelfall parallel zu den Verbrauchern angeschlossen werden. Im Wesentlichen kann man hier zwischen aktiven Filtern und passiven Filtern unterscheiden (vergleiche Große-Gehling und andere, "Blindleistungskompensation - Netzqualität", Kap. 6 "passive und aktive Filteranlagen", VDE-Verlag Berlin 2009, ISBN 978-3-8007-31099-2).

Aktive Filter sind Geräte, die mithilfe einer Leistungselektronik Ströme in das Netz einspeisen, die gegenphasig zu den von den nichtlinearen Verbrauchern erzeugten Strömen verlaufen und so zu deren Auslöschung führen, also quasi Filterstrom bereitstellen. Dieser Filterstrom wird derart geregelt, dass die Komponenten des aktiven Filters nicht überlastet werden (z.B. US 2005/0024131 A1, Lazar, 3. Februar 2005).

In der Nachrichtentechnik / Leistungselektronik werden aktive Filter nach dem Energiespeicherelement auch als switched capacitor filter (SC-Filter) bezeichnet (z.B. erwähnt in: LAI LL ET AL: "Application of neural networks to predicting harmonics", EPE, 95: 6th. EUROPEAN CONFERENCE ON POWER ELCTRONICS AND APPLICATIONS, Brüssel, EPE association, B, Bd. 3, 19. Sept. 1995, Seiten 3533-3538, XP000538365).

Passive Filter bestehen hauptsächlich aus induktiven und kapazitiven Bauelementen. Es gibt abgestimmte und verstimmte passive Filter. Bei abgestimmten Filtern sind die Komponenten so gewählt, dass sie hauptsächlich Oberschwingungsströme in der Nähe bestimmter Frequenzen aufnehmen bzw. "absaugen" und damit die Spannungsverzerrungen reduzieren. Dies ist in der Wirkung gleichbedeutend mit der Vorstellung, dass Ströme gegenphasig zu den von nichtlinearen Verbrauchern erzeugten Strömen in das Netz eingespeist werden, also quasi Filterstrom bereitgestellt wird. Im Folgenden wird für abgestimmte passive Filter die verkürzte Bezeichnung passive Filter verwendet, da im allgemeinen Sprachgebrauch die verstimmten passiven Filter meistens als verdrosselte Kompensationsanlagen bezeichnet werden. Bei diesen Filtern steht eine Grundschwingungs- Blindleistungskompensation im Vordergrund. Die sich hierbei zwangsläufig ergebende Oberschwingungs-Stromaufnahme wird bei der Auswahl der Komponenten berücksichtigt, gehört aber nicht zu den eigentlichen Aufgaben des verstimmten Filters. In DE 102012216266A1, Siemens, 13.03.2014, wird ein Berechnungsverfahren zum Herstellen eines solchen Filters beschrieben, welches aus einer Reihenschaltung einer Spule und mehreren parallel angeordneten schaltbaren Kondensatoren besteht. Mit diesem Filter wird die benötigte Blindleistung bereitgestellt, ohne dass Resonanzen mit einer vom AC/DC-Wandler erzeugten Oberschwingung auftreten. Dies wird erreicht mittels einer optimierten Bestimmung der Komponenten. Das Zu- und Abschalten der Kondensatoren richtet sich hier nach der benötigten Gesamtkapazität bzw. der benötigten Blindleistung, wie bei jeder handelsüblichen, automatisch geregelten Blindleistungs-Kompensationsanlage.

Aktive und passive Filtermethoden haben in verschiedenen Anwendungen jeweils Vor- und Nachteile. Einer der wesentlichen Nachteile einer passiven Filtermaßnahme im Vergleich zu Aktivfiltern ist, dass sie bei zu starken Verzerrungen der Netzspannung überlastet werden und sich dann zum Selbstschutz vorzugsweise selbsttätig abschalten müssen. Zwei der wesentlichen Vorteile von Passivfiltern im Vergleich zu Aktivfiltern sind der deutlich niedrigere Preis (Investitionsaufwand) und die deutlich niedrigeren Verluste (Betriebsaufwand).

Stand der Technik für Passivfilter

Bekanntlich werden passive Filter mit Filterstufen so gebaut, dass jede Stufe eines passiven Filters auf eine bestimmte Frequenz, insbesondere Abstimmfrequenz, ausgelegt ist. Speziell für diese Frequenzen liefern die Stufen des Passivfilters quasi entsprechende Ströme. Durch diese Filterströme werden Störgrößen stark reduziert.

Je näher die Abstimmfrequenz einer Filterstufe an der abzusaugenden Frequenz ist, desto höher wird der Filterstrom, desto höher ist aber auch die Wahrscheinlichkeit, dass diese Filterstufe überlastet wird.

Eine der dominanten Oberschwingungen in unseren 50 Hz-Netzen ist die 5. Harmonische, also ein 250 Hz-Signal. In 60 Hz-Netzen ist die 5. Harmonische ebenfalls dominant, es ist dann allerdings ein 300 Hz-Signal. Die weiteren Ausführungen in dieser vorliegenden Anmeldung gelten analog für diese 300 Hz-Signale, auch wenn es nicht ausdrücklich erwähnt wird. Grundsätzlich gibt es noch weitere Oberschwingungen, beispielsweise die 3., 7. und 11. Für alle Harmonischen gelten die weiteren Ausführungen sinngemäß bzw. analog.

Ein scharf abgestimmter Filterkreis für die 5. Harmonische würde selbst bei einer sehr kleinen Spannungsverzerrung von 250 Hz einen so hohen Strom aufnehmen, dass bereits bei einer leichten Erhöhung der bei der Auslegung zugrunde gelegten Oberschwingungsbelastung eine Überlastung kaum zu vermeiden wäre. Letztlich wäre nur noch ein kleiner ohmscher Widerstand vorhanden, der sich hauptsächlich aus der Güte der Filterkreis-Drossel (technische Realisierung einer Induktivität) ergibt.

Üblicherweise wählt man für den Filterkreis eine Abstimmfrequenz etwas unterhalb der entsprechenden Harmonischen, also in diesem Fall z.B. 240 Hz. Der Filterkreis hat dann bei 250 Hz immer noch eine hohe Filterwirkung, wird aber erst bei einer deutlich höheren Spannungsverzerrung im Netz überlastet oder wegen Überlast abgeschaltet.

Beim aktuellen Stand der Technik wird ein passiver Filterkreis von einem Fachmann anhand der beabsichtigten Filterwirkung und der existierenden Belastung des Netzes für die spezifische Situation ausgelegt und projektiert. Der Fachmann legt hierzu aufgrund der vorliegenden Daten die zu wählenden kapazitiven und induktiven und gegebenenfalls ohmschen Bauelemente fest.

Entsprechend der Thomsonschen Schwingungsgleichung

$$f = \frac{1}{2 \times \pi \times \sqrt{L \times C}}$$

mit L für Induktivität, mit C für Kapazität und f für Frequenz bestimmt das Produkt aus L und C die Abstimmfrequenz f. Der Betrag der Impedanz des Filters hat hier ein Minimum. Neben der gegebenen/gewählten Abstimmfrequenz hängt die Impedanz des Filters im Wesentlichen vom Kondensator (technische Realisierung einer Kapazität) ab. Die Impedanz eines Filters bestimmt in einem gegebenen Netz, charakterisiert durch die Netzimpedanz, seine Filterwirkung. Je kleiner die Filterimpedanz im Vergleich zur Netzimpedanz ist, umso höher ist die Filterwirkung. Die Belastung des Filters hängt nun von den im Netz vorhandenen Störgrößen ab. Sollten diese nicht nur kurzzeitig größer als die bei der Auslegung berücksichtigten Störgrößen sein, wird das Filter überlastet. Schutzeinrichtungen, beispielsweise über Übertemperaturschutz, Überstromrelais usw. veranlassen die Abschaltung. Es kann zunächst nicht mehr gefiltert werden. Im Regelfall ist nun ein weiteres Filter zu installieren oder das bestehende Filter durch ein leistungsstärkeres zu ersetzen. Beide Maßnahmen sind nicht nur aufwendig, sondern erfordern auch eine Unterbrechung des Filterbetriebs.

Bei passiven Filtern ist es bekannt, Drosseln gelegentlich vorbeugend mit zusätzlichen Anschlüssen versehen (vergleiche "Betriebsanleitung für Mittelspannungs-Produkte", Firmenschrift der Hans von Mangold GmbH und Co. KG, D-52080 Aachen, Stand 04.01.2008), damit nach festgestellter Überlastung ein anderer Anschluss mit höherer Induktivität verwendet werden kann. Die Abstimmfrequenz sinkt, und bei gleicher Störspannung sinkt die Belastung des Filters. Allerdings muss dies im spannungslosen Zustand erfolgen, während dieser Zeit wird nicht gefiltert, und natürlich ist es nachteilig, die Anschlüsse häufig wechseln zu müssen. Ein ähnliches Vorgehen wird bei der Verwendung von Zick-Zack-Transformatoren als Nullsystemfilter vorgeschlagen. Die Veränderung der Impedanz erfolgt hier durch das Umklemmen der Anschlussleitungen im ausgeschalteten Zustand (US 5 406 437 A, LEVIN MICHAEL I., 11. April 1995, Spalte 1, Zeile 60 bis 67). Ein anderes Verfahren zur Erhöhung der Verfügbarkeit von Filtern besteht darin, ein Filter aus mehreren gleich abgestimmten Filterkreisstufen so aufzubauen, dass beim Abschalten einer der Stufen bei einem Fehler die verbleibenden Stufen nicht überlastet werden (US 2012/0182089 A1, Liang et al., 19. Juli 2012). Zusätzlich zu diesem Verfahren wird auf die Nutzung von unterschiedlichen Drosselanzapfungen hingewiesen. Das Umklemmen der Drosselanzapfungen erfolgt im abgeschalteten Zustand.

Es ist bekannt, passive Filter gelegentlich zu bedämpfen bzw. mit Dämpfungselementen wie z.B. ohmschen Widerständen zu versehen. Die Dämpfung erfolgt mittels eines elektrischen Dämpfungswiderstands, der der Filterkreis-Drossel parallel geschaltet wird. Ein bedämpftes Filter reduziert bekanntlich seine Belastung und seine Wirkung in der Nähe der Abstimmfrequenz im Vergleich zu einem unbedämpften Filter infolge der resultierenden Impedanzerhöhung. Aus einem relativ schmalbandigen Filter wird durch die Widerstands-Dämpfung ein breitbandiges Filter. Diese Eigenschaft kann vorteilhaft sein und zusätzlich praktische Bedeutung gewinnen. Dadurch können beispielsweise unterschiedliche, höherfrequente Störungen gleichzeitig im Netz reduziert werden. Allerdings kann der Dämpfungswiderstand in Folge zu hoher Störungen im Netz überlastet werden und muss deshalb vom Netz getrennt werden. Das Filter wird unwirksam und muss nachteiligerweise außer Betrieb gesetzt werden.

Der Erfindung liegt die Aufgabe zugrunde, einen passiven Filterkreis zu schaffen, bei dem die Abstimmfrequenz und/oder die Impedanz unter Erzielung einer erhöhten Filter-Verfügbarkeit veränderbar ist. Es soll das bei bekannten Filtern bestehende Problem angegangen werden, dass diese sich bei Stromüberlastung ausgerechnet dann abschalten, wenn sie am dringendsten gebraucht werden. Zur Lösung wird auf das im Anspruch 1 angegebene Filter-Betriebsverfahren und auf das im Anspruch 7 angegebene passive Wechselstrom-Oberschwingungsfilter hingewiesen. Optionale, vorteilhafte Ausgestaltungen sind in den abhängigen Ansprüchen gekennzeichnet.

Demnach wird bei dem anfangs genannten Betriebsverfahren während des laufenden Filter-Betriebs ohne dessen Unterbrechung je nach Strom- oder sonstiger Leistungsbelastung des Filters die Abstimmfrequenz und/oder Impedanz, insbesondere dazu dessen Induktivität und/oder Kapazität, entsprechend einer vorgegebenen maximalen Strom- oder sonstigen Leistungsbelastbarkeit des Filters verändert. Das Filter wird vorzugsweise in begrenztem Umfang verstimmt, so dass die Saug- oder sonstige Filterwirkungen zwar etwas beeinträchtigt ist, das Filter aber weiter im Betrieb gehalten und seine Wirkung am Netz ausüben kann. Erniedrigt sich die Oberwellen-, Verzerrungs-, oder sonstige Störungsbelastung aus dem Netz (wieder), werden entsprechend einer zweckmäßigen Erfindungs-Ausgestaltung die Saug- oder sonstige Filterwirkungen durch Nachstimmen der Abstimmfrequenz bzw. der Impedanz und/oder Kapazität des Filters oder durch Nachstellen von dessen Impedanz wieder optimiert.

Bei dem eingangs genannten Wechselstrom-Oberschwingungs-Filter bzw. der entsprechenden Filterschaltung ist mindestens eine der induktiven und kapazitiven und gegebenenfalls ohmschen Komponenten in einzelne Teilkomponenten aufgeteilt, welche je nach Strom- und/oder Leistungsbelastung zur Anpassung der Abstimmfrequenz und/oder Impedanz des Filters an seine vorgegebene, insbesondere maximale Strom- oder Leistungsbelastbarkeit separat voneinander und/oder selektiv aktivierbar und deaktivierbar sind. Liegt beispielsweise die Strom-Überlastgrenze des Filters bei 100 A, übersteigt aber der tatsächliche Strom im Netz diese Grenze, wird über selektives Aktivieren oder Deaktivieren die originäre Abstimmfrequenz von beispielsweise 242 Hz verstimmt und auf beispielsweise auf 235 Hz erniedrigt. Dadurch wird die Saugwirkung, Stromaufnahme oder sonstige Filterleistung für die zu Filtern Oberschwingung zwar herabgesetzt, jedoch kann das durch Verstimmen bzw. Erniedrigen der Abstimmfrequenz vor Überlastung geschützte Filter weiter am Netz gehalten werden und Filterarbeit entfalten, wenn auch in relativ eingeschränkterem Umfang.

Gemäß einer besonderen, optionalen Ausgestaltung der Erfindung wird ein Regel- und/oder Steuergerät mit einer Serienschaltung aus Induktivität und Kapazität, insbesondere Kondensator und Drossel, der Art kombiniert, dass der aufgenommene Strom (Filterstrom) trotz schwankender Oberschwingungs-Spannungspegel bzw. Spannungsverzerrung in einem weiten Bereich relativ oder zumindest weitgehend oder im Wesentlichen konstant bleibt und vor allem keine Überlastung der induktiven und/oder kapazitive Komponenten droht. Hierzu wird situativ, also abhängig von der momentanen Belastung, die Abstimmfrequenz gesteuert, also Werte der Kapazität und/oder Induktivität durch Zu- und Abschalten von induktiven und/oder kapazitive Anteilen der Filter-Impedanz geändert, wobei diese Zu- und Abschaltung unterbrechungsfrei erfolgt. Mit dem Regelbetrieb wird insbesondere der Vorteil erzielt, dass das Potenzial bzw. die maximal mögliche Stromaufnahme des Filters weiter ausgeschöpft werden kann, wenn auch mit verstimmter, beispielsweise nach unten verstellter Abstimmfrequenz. Die Regel- und/oder Steuereinrichtung enthält Messmittel beispielsweise für die Filter-Strombelastung durch Oberschwingungen und sonstige Verzerrungen und entscheidet durch selektives Verändern von induktiven oder kapazitiven und gegebenenfalls ohmschen Anteilen an der Impedanz, wie die Abstimmfrequenz des Filters gegebenenfalls verstellt wird.

Gemäß einer anderen, optionalen Ausgestaltung ist ein Regel-und/oder Steuergerät mit einer bedämpften Schaltungsanordnung zur Wechselstrom-Oberschwingungsfilterung kombiniert, wobei trotz schwankender Oberschwingungs-Spannungspegel bzw. Spannungsverzerrungen in einem weiteren Bereich die Filterleistung zumindest weitgehend oder im Wesentlichen konstant bleibt. Hierzu wird situativ, das heißt, in Abhängigkeit von bzw. je nach der Belastung mit Oberschwingungen bzw. Verzerrungen unterschiedlicher Frequenzlagen die Dämpfung zur Überlastungs-Verhinderung gesteuert oder geregelt, also der ohmsche Anteil an der Filter-Impedanz durch geregeltes Zu-und Abschalten von Teilwiderständen geändert.

Im Rahmen der Erfindung ist es zweckmäßig, Induktivitäten und Kapazitäten, die zu einem passiven Filterkreis verschaltet sind, auszuwählen und selektiert anzusteuern, so dass sich ein passiver Filterkreis mit unterbrechungsfrei veränderbarer Abstimmfrequenz bzw. Impedanz realisieren lässt, wobei Oberschwingungen aus dem Stromnetz abgesaugt werden und Filterstrom geliefert wird.

Nach einer weiteren Erfindungsvariante wird die Filterschaltung mit einem nennenswerten oder spürbaren, ohmschen Wirkwiderstands-Anteil versehen. Dazu werden beispielsweise der Filterkreis-Drossel ein Dämpfungswiderstand oder ein oder mehrere Dämpfungswiderstand-Teilkomponenten situativ, also je nach Verzerrungs-oder Oberschwingungs-Situation im Netz, parallel geschaltet. Der Dämpfungswiderstand ergibt in Abhängigkeit von seinem Widerstandswert eine Erhöhung der Filter-Impedanz. Unter der Annahme immer kleiner werdender Widerstandswerte des Dämpfungs-Wirkwiderstandsanteils an der Impedanz geht die ursprünglich gedämpfte Schwingung über den aperiodischen Grenzfall in den Kriechfall über. Solchenfalls gibt es keine Abstimmfrequenz mehr, in einem weiten Frequenzbereich aber eine gewünschte Impedanzreduzierung. Der aperiodische Grenzfall und/oder Kriechfall lassen sich bei entsprechender Anforderung zweckmäßig über das Regel-und/oder Steuergerät gezielt herbeiführen, indem Letzteres den ohmschen Wirkwiderstands-Anteil in seiner Höhe oder Betrag entsprechend beeinflusst.

Im Rahmen einer zweckmäßigen Erfindungsvariante erfolgt die Abstimmung der Kapazität und/oder (Gesamt-)Induktivität bzw. Teilinduktivitäten dergestalt, dass bei einer relativ niedrigen Netzbelastung bzw. Spannungsverzerrung ein sehr scharf abgestimmter Filterkreis entsteht, der auch bei kleiner Spannungsverzerrung einen großen Filterstrom liefert, und bei dem dann vorzugsweise in Stufen die Induktivität und/oder Kapazität derart verändert werden, dass sich mit zunehmender Netzbelastung bzw. Spannungsverzerrung eine geringere Abstimmfrequenz ergibt, die es erlaubt, das Filter weiterhin in Betrieb zu halten, ohne dass es überlastet wird, und wobei es weiterhin den vereinbarten Filterstrom liefert.

Im Rahmen der Erfindung liegt eine Schaltungsanordnung, die im Wesentlichen aus einer Reihenschaltung von einer oder mehreren Drosseln (Induktivitäten) und einem oder mehreren Kondensatoren (Kapazitäten) besteht und zur Reduzierung von Oberschwingungen und/oder Verzerrungen in elektrischen Energieverteilnetzen ausgelegt ist. Dabei werden die induktiven und/oder kapazitiven Blindanteile der Filter-Impedanz in Teilgrößen aufgeteilt, so dass mittels Schalter die Abstimmfrequenz und die Impedanz der Schaltungsanordnung situativ und unterbrechungsfrei den Verzerrungen oder Oberschwingungs-Belastungen der Netzspannung angepasst wird. So wird in einem weiten Bereich der Netzspannungsverzerrung oder Oberschwingungs-Belastung die Schaltungsanordnung zur Filterung nicht überlastet wird und ihr ermöglicht, den vereinbarten bzw. spezifizierten Filterstrom zu liefern.

Im Rahmen der Erfindung ergeben sich mehrere Realisierungsvarianten für die Schalter: So lassen sich an einer Reihenschaltung mehrerer Drosseln (Teilinduktivitäten) durch deren situative, wahlweise elektrische Überbrückungen oder Ansteuerung von Überbrückungs-Schaltern (ähnlich Kurzschluss-Bügeln) bestimmte Teilinduktivitäten selektiv aktivieren oder deaktivieren und so die beabsichtigte Abstimmfrequenz und/oder Impedanz an die Strom- oder Leistungsbelastungs-Situation anpassen. Alternativ oder zusätzlich zu den Überbrückungs-Schaltern lassen sich im Rahmen der Erfindung bei der soeben genannten Reihenschaltung die Anpassungen mittels eines oder mehrerer Wahl- oder Stufenschalter vornehmen. Analoges gilt bei einer Parallelschaltung mehrerer Teilkapazitäten bzw. Regelkondensatoren, indem diese mittels geeigneter Schalter, insbesondere Überbrückungs-, Wahl- oder Stufenschalter, selektiv aktiviert oder deaktiviert werden.

Eine Option für die Erfindung besteht in der Ergänzung um Dämpfungswiderstände, die parallel zur Induktivität (Drossel) oder zu je einer Teilinduktivität (einer der in Reihe geschalteten Drosseln) angeordnet sind. Dabei wird mittels Schalter die Dämpfung und/oder die Impedanz der Schaltungsanordnung oder des Filters situativ und unterbrechungsfrei den höherfrequenten Verzerrungen der Netzspannung angepasst, so dass in einem weiteren Bereich oder relativ weiten Bereich der Netzspannungsverzerrung die Schaltungsanordnung nicht überlastet und der vereinbarte oder spezifizierte Filterstrom geliefert wird.

Gemäß einer zweckmäßigen Erfindungsausgestaltung wird zur Realisierung des Wirk-Widerstandsanteils an der Filter-Impedanz eine Reihenschaltung mehrerer Teilwiderstände eingesetzt. Dabei lässt sich die Widerstandsanpassung an die Netzbelastung mit Verzerrungen und Oberschwingungen und für die beabsichtigte Dämpfung und Impedanz durch wahlweise elektrische Überbrückung von Teilwiderständen mittels ÜberbrückungsSchalter vornehmen, analog zur oben angesprochenen Reihenschaltung mehrerer Drosseln bzw. Teilinduktivitäten. Alternativ oder zusätzlich lässt sich der Wirk-Widerstandsanteil mittels einer Parallelschaltung mehrerer Teilwiderstände realisieren, wobei sich die situative Wirk-Widerstandsanpassung zur Erzielung der beabsichtigten Dämpfung und Impedanz durch selektives Aktivieren und Deaktivieren der Teilwiderstände mittels Schalter-Betätigungen vornehmen lässt. Im Rahmen der Erfindung liegt auch eine Kombination aus Parallel- und Reihenschaltung(en) ("Matrixschaltung").

Im Rahmen der Impedanz-Anpassung durch Schaltmittel, wie oben angesprochen, besteht eine zweckmäßige Ausbildung im Rahmen der Erfindung darin, dass ein Steuer-und/oder Regelgerät derart ausgeblldet und/oder programmiert ist, dass allein auf der Basis des durch die Filter-Schaltungsanordnung fließenden Stromes die Schalterstellungen angesteuert werden. Die Information darüber kann dadurch erfolgen, dass in der Schaltungsanordnung Stromwandler angeordnet sind, deren Sekundärströme dem Steuer- und/oder Regelgerät über eine geeignete Schnittstelle zugeführt werden. Alternativ oder zusätzlich kann diese Information dadurch realisiert sein, dass dem Steuer- und/oder Regelgerät ein Spannungsfall bzw. Spannungsabfall Ober eine Induktivität oder Teilinduktivität beispielsweise über Analog-/Digitalwandler zugeführt wird. Bei einer dreiphasigen Schaltungsanordnung insbesondere für Drehstrom ist es zweckmäßig, dass dies für die 3 Phasen jeweils erfolgt. Um in dreiphasigen Anwendungen bei unsymmetrischen Verzerrungen keine Überlast Situation herbeizuführen, ist der Eigenstrom der Filterstufe bzw. der Spannungsfall an der Drossel der Filterstufe für jede Phase zu bestimmen und dem Steuergerät zuzuführen.

Weitere Einzelheiten, Merkmale, Kombinationen von Merkmalen, Vorteile und Wirkungen auf der Basis der Erfindung ergeben sich aus der nachfolgenden Beschreibung bevorzugter, optionaler Ausführungsbeispiele der Erfindung sowie aus den Zeichnungen. Diese zeigen in:

Figur 1 eine Filterschaltung mit Steuergerät und per Wahlschalter zu- und abschaltbaren Teilinduktivitäten;

Figur 2 eine Filterschaltung mit Steuergerät und per Überbrückungsschalter zu- und abschaltbare Teilinduktivitäten;

Figur 3 eine Filterschaltung mit Steuergerät und per Kondensatorschalter zu- und abschaltbaren Teilkapazitäten;

Figur 4 eine Filterschaltung mit Steuergerät und per Widerstandsschalter zu- und abschaltbaren Dämpfungswiderständen in Parallelschaltung;

Figur 5 eine Filterschaltung mit Steuergerät und per Widerstandsschalter realisiert als Überbrückungsschalter, zu- und abschaltbaren Dämpfungswiderständen in Reihenschaltung;

Figur 6 eine Filterschaltung mit Steuergerät entsprechend Figur 2 in weiter beispielhaft konkretisierter Ausgestaltung; und

Figur 7 eine Filterschaltung mit Steuergerät entsprechend Figur 3 in weiter beispielhaft konkretisierter Ausgestaltung.

Die Ausführungsbeispiele sind im Folgenden mittels einphasiger Ersatzschaltbilder beschrieben. Im konkreten Anwendungsfall kann die Ausführung entweder einphasig (Anschluss Phase - Neutralleiter) erfolgen, oder zweiphasig (Anschluss Phase - Phase), oder dreiphasig ohne Neutralleiteranschluss, oder dreiphasig mit Neutralleiteranschluss.

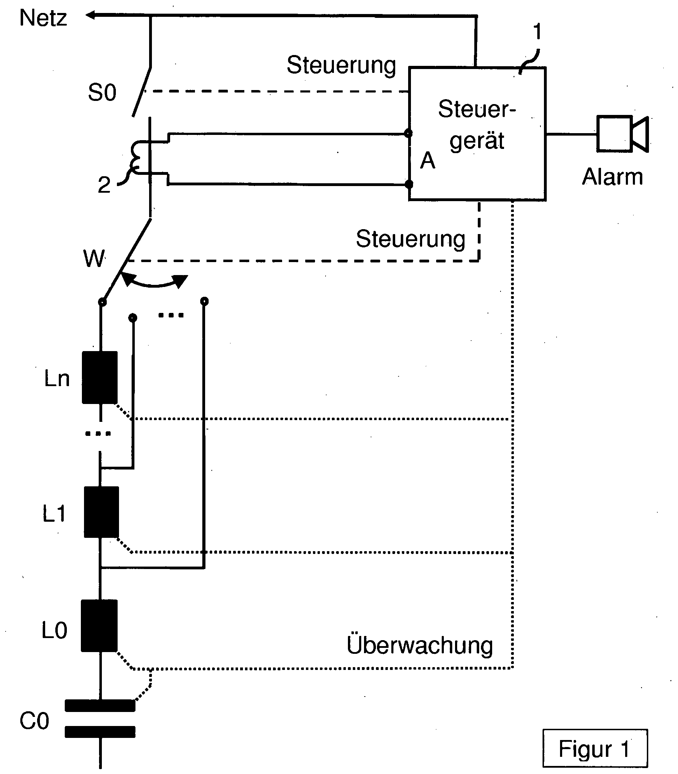

Gemäß Figur 1 ist eine unveränderliche, kapazitive Komponente in Form eines Kondensators C0 in Serie zu einer Reihenschaltung aus mehreren Teilinduktivitäten L0, L1, ..., Ln angeordnet. Über einen Hauptschalter S0 lässt sich diese Serienschaltung C0, L0, L1, ..., Ln netzparallel anschließen. Der Hauptschalter S0 wird von einem Steuergerät 1 mit darin implementierter Regelung (nicht gezeichnet) zum Öffnen oder Schließen angesteuert, wie durch eine gestrichelte Linie angedeutet. Dem Hauptschalter S0 in Serie nachgeordnet ist ein Wahlschalter W, der mit seiner Anschlussklemme mit dem beweglichen Schaltkontakt des Hauptschalters S0 verbunden ist. Der bewegliche Schaltkontakt des Wahlschalters W lässt sich je nach Ansteuerung durch das Steuergerät 1 (vergleiche gestrichelte Linie zwischen Steuergerät und Wahlschalter) mit der jeweiligen Eingangsklemme einer der Regelinduktivitäten L1, ..., Ln verbinden, zu denen alle Teilinduktivitäten außer der Hauptinduktivität L0 zählen. Die Hauptinduktivität L0 zeichnet sich dadurch aus, dass sie im Gegensatz zu den Regelinduktivitäten L1, ..., Ln in ihrem Induktivitätswert konstant gehalten und nicht mit dem Wahlschalter W gekoppelt ist. Von der Hauptinduktivität L0 unterscheiden sich die Regelinduktivitäten L1, ..., Ln dadurch, dass sie mittels des Wahlschalters W je nach dessen vom Steuergerät 1 kontrollierter Schaltstellung mit dem Filterstromkreis verbunden bzw. aktiviert oder vom Filterstromkreis getrennt bzw. deaktiviert sind. Im Steuergerät 1 ist noch eine Strommessung A realisiert, welche eingangsseitig mit der Sekundärseite eines Stromwandlers 2 gekoppelt ist. Der Stromwandler 2 ist zwischen dem beweglichen Schaltkontakt des Hauptschalters S0 und dem stationären Anschluss des Wahlschalters W angeordnet. Dadurch lässt sich der durch die Filterschaltung fließende Strom über die Strommess-Schnittstelle A als Istwert für die im Steuergerät implementierte Regelung erfassen. Übersteigt der Istwert eine Überlast-Grenze bzw. eine maximale Strombelastbarkeit, wird der Wahlschalter W zur Umschaltung zwischen gemäß Ausführungsbeispiel drei unterschiedlichen Induktivitätswerten L0, L0 + L1, L0 + L1 + Ln verstellt, wobei die Regelinduktivitäten L1, ..., Ln entsprechend aktiviert bzw. deaktiviert werden, bis eine Abstimmfrequenz und/oder Impedanz eingestellt ist, bei welchen die maximale Strombelastbarkeit eingehalten wird. Bei der Serienschaltung der Teilinduktivitäten (Hauptinduktivität L0, Regelinduktivitäten L1, ..., Ln) und deren selektiver Aktivierbarkeit ist für jede gewünschte Abstimmfrequenz eine Teilinduktivität bzw. Drossel erforderlich.

Der Wahlschalter W besitzt eine besondere Ausprägung (nicht gezeichnet), die darin besteht, dass beim Umschalten von einem Induktivitätswert auf einen anderen zunächst die neue Stufung eingeschaltet und anschließend die bisherige Stufung abgeschaltet wird. Auf diese Weise wird erreicht, dass der Stromfluss zu keiner Zeit unterbrochen wird und somit eine unterbrechungsfreie Filterwirkung gewährleistet ist. Praktisch kann dies realisiert werden mit an sich bekannten Transformator-Stufenschaltern (nicht gezeichnet), deren Einsatz für regelbare Ortsnetz-Transformatoren bekannt ist (vergleiche "Stufenschalter für Leistungstransformatoren" in de.Wikipedia.org, abgerufen am 04.03.2015). Eine andere Realisierungsmöglichkeit besteht in einer Vielzahl separater Schaltelemente, die gemeinsam von einer entsprechend schaltungs- und/oder programmtechnisch ausgebildeten Steuerung kontrolliert und koordiniert angesteuert werden.

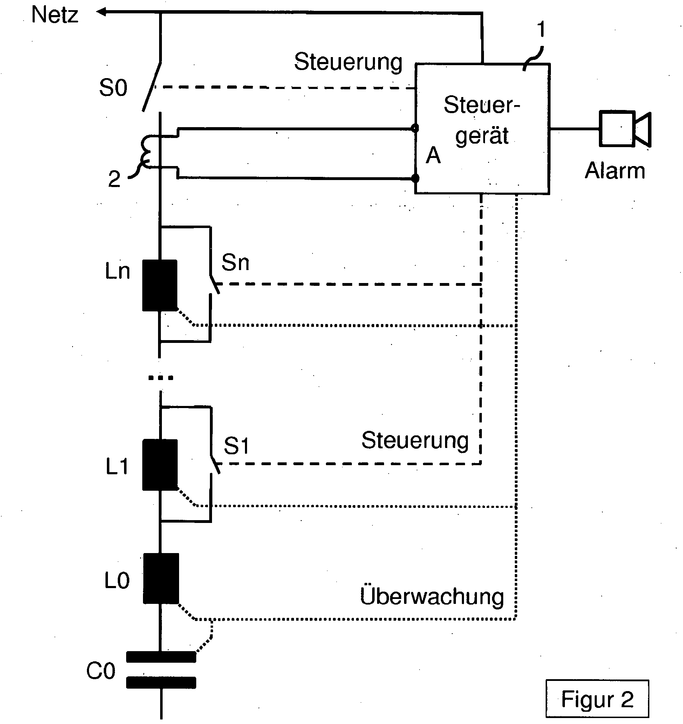

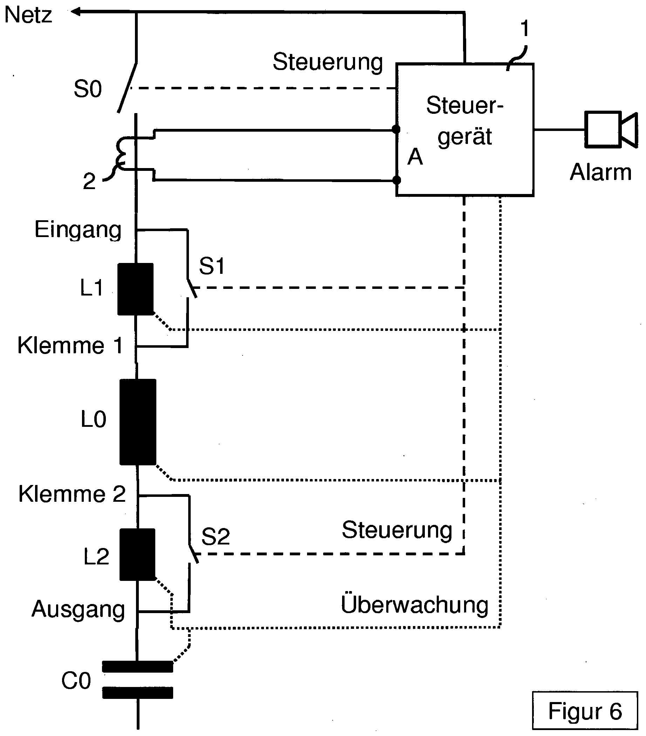

Die Ausbildung nach Figur 2 unterscheidet sich von der nach Figur 1 dadurch, dass die Umschaltung zwischen unterschiedlichen Induktivitätswerten mit Hilfe von Überbrückungsschaltern S1, ..., Sn erfolgt, welche die Regelinduktivitäten L1, ..., Ln in der Reihenschaltung überbrücken bzw. kurzschließen. Dazu ist jeder Überbrückungsschalter S1, ..., Sn mit seinen beiden Anschlussklemmen mit den beiden jeweiligen Anschlussklemmen der zugeordneten Regelinduktivität L1, ..., Ln verbunden. Der verstellbare Schaltkontakt der Überbrückungsschalter S1, ..., Sn lässt sich zum Öffnen oder Schließen vom Steuergerät 1 betätigen. Weder beim Öffnen noch beim Schließen des beweglichen Schaltkontakts eines Überbrückungsschalter wird der Stromfluss unterbrochen, so dass ein unterbrechungsfreier Filterbetrieb gegeben ist. Die Hauptinduktivität L0 ist wie auch nach Figur 1 nicht mit einem Schalter gekoppelt und somit nicht vom Filterstromkreis trennbar, sondern vielmehr ständig in Betrieb und in ihrem Induktivitätswert konstant gehalten. Bei der Ausbildung nach Figur 2 lässt sich bei Wahl unterschiedlicher Werte für die Regelinduktivitäten L1, ..., Ln eine höhere Anzahl an Stufen für den induktiven Anteil an der Filter-Impedanz erreichen, als es der Anzahl der tatsächlich eingesetzten Teilinduktivitäten L0, L1, ..., Ln entspricht (siehe auch Figur 6).

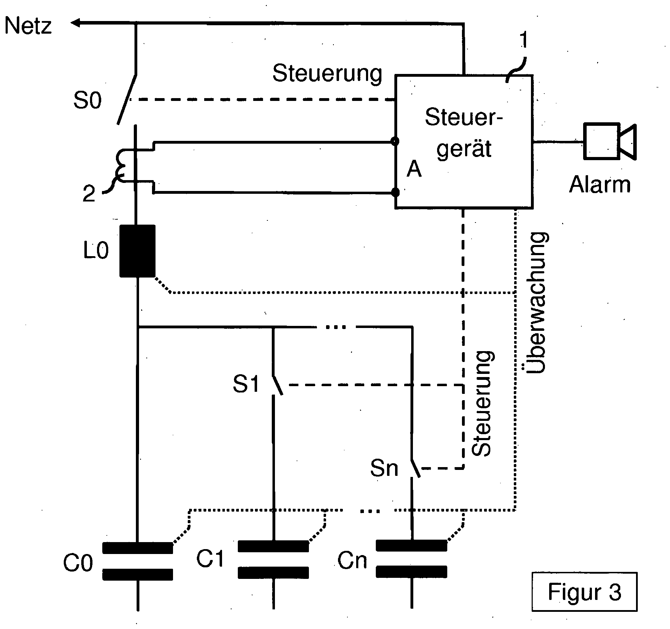

Bei der Ausbildung gemäß Figur 3 ist eine Parallelschaltung unterschiedlicher, kapazitiver Teilkomponenten C0, C1, ..., Cn in Serie zu einer festen bzw. im Induktivitätswert konstant gehaltenen, induktiven Komponente L0 angeordnet. Dabei sind die Regelkapazitäten C1, ..., Cn je mit einem Kondensatorschalter S1,..., Sn beaufschlagt. Die Kondensatorschalter S1, ..., Sn sind jeweils als Unterbrechungsund Schließschalter ausgeführt, von denen jeweils eine der beiden Anschlussklemmen gemeinsam bzw. parallel mit einer Anschlussklemme der Induktivität bzw. Drossel L0, und die jeweils andere Schalter-Anschlussklemme mit je einer Anschlussklemme von einer mehrerer Regelkapazitäten bzw. eines Regelkondensatoren C1, ..., Cn verbunden ist. Die beweglichen Schaltkontakte der Kondensatorschalter S1, ..., Sn lassen sich mittels Schalter-Ansteuerungseingänge durch das Steuergerät 1 zum Unterbrechen und Schließen ansteuern (durch gestrichelte Linien angedeutet). Von den kapazitiven Teilkomponenten ist lediglich die Hauptkapazität C0, welche in Serie zur induktiven Komponente bzw. Drossel L0 angeordnet ist, nicht mit einem Kondensatorschalter gekoppelt und mithin bei konstantem Kapazitätswert ständig im Einsatz gehalten.

Sind beispielsweise alle Kondensatorschalter geöffnet bzw. zur Unterbrechung angesteuert, ist nur die Hauptkapazität C0 in Serie mit der (einzigen) induktiven Komponente bzw. Drossel L0 im Filterbetrieb, und es entsteht ein sehr scharf abgestimmter Filterkreis mit Lieferung eines großen Filterstroms, was für eine niedrige Netzbelastung geeignet ist. Bei größer werdender Netzbelastung bzw. zunehmende Spannungsverzerrung aus dem Netz erhöht sich entsprechend der Filter-Eigenstrom, was über den Stromwandler 2 und die Strommessung A im Regelungsmodul des Steuergeräts 1 als Istwert sensiert wird. Über einen Vergleich dieses Istwerts mit der maximalen Strombelastbarkeit oder eines sonstigen Strom-Führungswerts wird im Steuergerät intern eine Stellgröße ermittelt, welche in entsprechende Schließ- oder Unterbrechungsstellungen für die Kondensatorschalter S1, ..., Sn umgesetzt wird. So lässt sich der kapazitive Anteil an der Impedanz des Filterkreises erhöhen (beispielsweise durch Zuschalten der Regelkapazität C1 mittels des Kondensatorschalters S1). Dies führt zu einer Absenkung der Abstimmfrequenz bzw. zu einer Erhöhung der Impedanz des Filters. Damit ist es möglich, das Filter weiterhin in Betrieb zu halten, ohne dass dies überlastet wird. Der vereinbarte Filterstrom lässt sich weiterhin liefern.

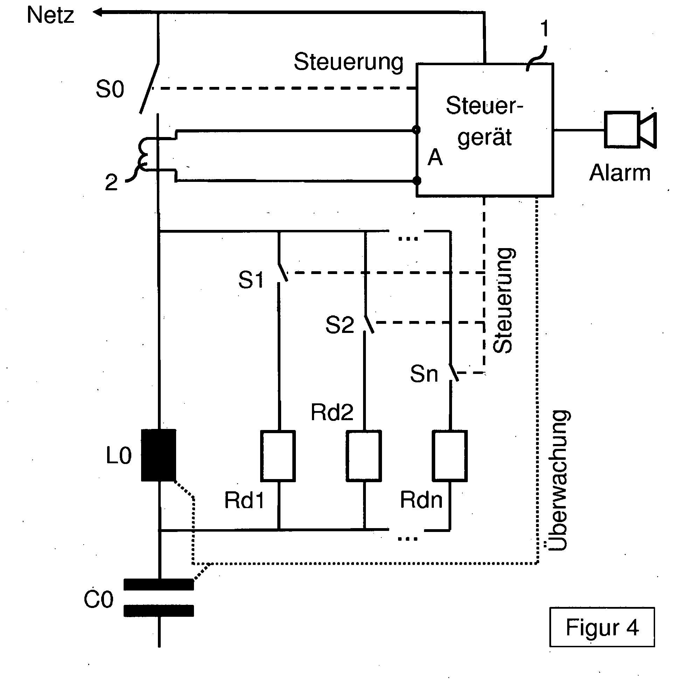

Gemäß Figur 4 wird der durch den Hauptschalter S0 einschaltbare Schwingkreis, bestehend aus der Induktivität L0 und der Kapazität C0 mittels schaltbarer Teil-Dämpfungswiderstände Rd1, ..., Rdn bedämpft, welche parallel zur Induktivität L0 angeordnet sind. Die Dämpfungswiderstände selbst sind zueinander parallel angeordnet und mittels Widerstandsschalter S1, ..., Sn, ebenfalls wie oben als Unterbrechung- und Schließschalter ausgeführt, aktivierbar oder deaktivierbar. Dazu sind die jeweiligen Ersten der beiden Anschlussklemmen der Widerstandsschalter gemeinsam bzw. parallel mit einer Anschlussklemme der Induktivität L0 verbunden. Die jeweiligen zweiten, verstellbare Schaltkontakte bildenden Anschlussklemmen sind je mit einem Dämpfungswiderstand Rd1, ..., Rdn verbunden. Diese wiederum sind gemeinsam bzw. parallel mit der anderen der beiden Anschlussklemmen der Induktivität L0 verbunden. Je nach der Stärke des über den Stromwandler 2 erfassten Filter-Eigenstroms im Vergleich zur maximalen Strombelastbarkeit werden die Widerstandsschalter S1, ..., Sn zum Unterbrechen oder Schließen bzw. zum Aktivieren oder Deaktivieren der zugeordneten Dämpfungswiderstände Rd1, ..., Rdn von der im Steuergerät 1 implementierten Regelung im Sinne eines Schutzes vor Strom-Überlastung des Filters angesteuert.

Dazu erhält das Steuergerät 1 bzw. die darin realisierte Regelung eine Information Ober die Belastung des Filters aus dem Stromwandler 2. Alternativ kann die Information bzw. der Strom in der Kapazität bzw. dem Kondensator C0 erfasst werden. Situativ bzw. entsprechend dem Auswertungsergebnis werden die Widerstandsschalter S1, ..., Sn zur Aktivierung oder Deaktivierung der Dämpfungswiderstände Rd1, ..., Rdn betätigt. Damit werden je nach Zustand der Widerstandsschalter ein oder mehrere Dämpfungswiderstände wirksam. Je mehr Widerstandsschalter geschlossen sind, umso kleiner wird der Gesamt-Widerstandswert der Parallelschaltung der Dämpfungswiderstände Rd1, ..., Rdn bzw. der ohmsche Anteil an der Filter-Impedanz. Folglich kann der Strom durch das Filter (Filterstrom) auf einen gewünschten bzw. zulässigen Wert geregelt werden.

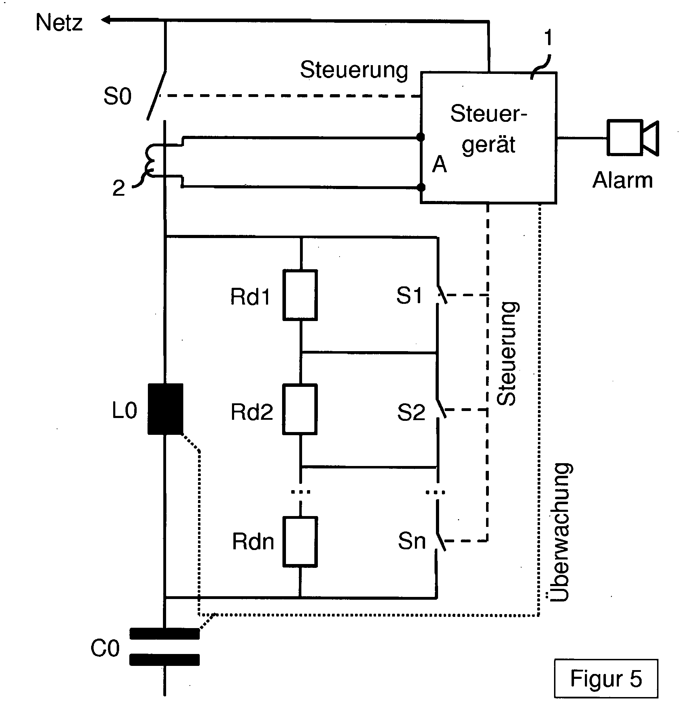

Vom Ausführungsbeispiel nach Figur 4 unterscheidet sich das gemäß Figur 5 dadurch, dass die Dämpfungswiderstände Rd1, ..., Rdn zueinander in Reihe angeordnet sind. Dabei sind die Widerstandsschalter S1, ..., Sn als Überbrückungsschalter wie nach Figur 2 ausgeführt. Je mehr Widerstandsschalter S1, ..., Sn geschlossen sind, umso kleiner wird der Gesamt-Widerstandswert der Dämpfungswiderstands-Serienschaltung.

Ebenso wie nach Figur 2 lassen sich bei dem in Figur 6 dargestellten Ausführungsbeispiel mit 3 Teilinduktivitäten bzw. Drosseln L0 (Hauptinduktivität), L1, L2 (Regelinduktivitäten) vier unterschiedliche Werte für den induktiven Anteil an der Filter-Impedanz und somit vier unterschiedliche Abstimmfrequenzen für den Filterkreis erreichen. Z.B. lässt sich der gesamte induktive Anteil an der Filter-Impedanz von 100 % so aufteilen, dass die zwischen dem Eingang und der Klemme 1 (die zwischen der 1. Teil- und Regel-Induktivität L1 und der Hauptinduktivität L0 liegt) angeordnete Teil- bzw. Regel-Induktivität L1 davon 3 %, die zwischen der Klemme 2 (die zwischen der Hauptinduktivität L0 und der 2. Teil- bzw. Regelinduktivität L2 liegt) und dem Ausgang (der zwischen der 2. Teil- und Regel-Induktivität L2 und der kapazitiven Komponente bzw. dem Kondensator C0 liegt) angeordnete Teil- bzw. Regel-Induktivität L2 davon 6 % betragen. Somit verbleiben für die Hauptinduktivität L0 zwischen der Klemme 1 und der Klemme 2 91 % des gesamten, induktiven Anteils der Filter-Impedanz zwischen dem Eingang und dem Ausgang der Drossel- bzw. Induktivitäts-Reihenschaltung. Abhängig von der Stellung der Überbrückungsschalter S1, S2 in Figur 6 ergeben sich folgende mögliche Induktivitätswerte:

| Uberbrückungsschalter 1 | Überbrückungsschalter 2 | Wirksame Induktivität |
|---|---|---|
| Offen | Offen | 100% |
| Geschlossen | Offen | 97% |
| Offen | Geschlossen | 94% |
| Geschlossen | Geschlossen | 91% |

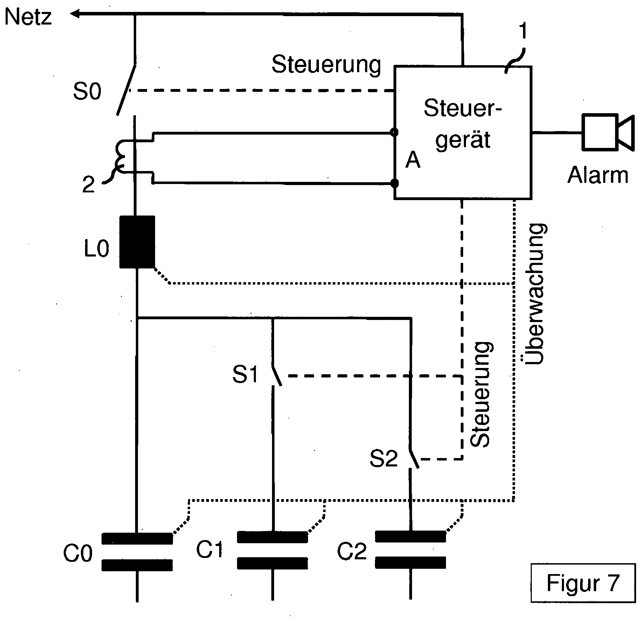

Gemäß Figur 7 führen bei der Variante mit der Parallelschaltung von Kondensatoren bzw. der Teil-Kapazitäten C0, C1, C2 (vergleiche Figur 3) führen ähnliche Überlegungen dazu, auch hier mit unterschiedlichen Kapazitätswerten für die beiden Regelkondensatoren C1, C2 zu arbeiten. Wählt man in dem in Figur 7 dargestellten Beispiel die Kapazitätswerte so, dass die Teilkomponente und Hauptkapazität C0 91 % der Gesamt-Kapazität (Letzteres ist Summe der drei Teil-Kapazitäten C0, C1, C2) ausmacht, und die 1. Regelkapazität C1 mit 3 % und die 2. Regelkapazität C2 mit 6 % der Gesamt-Kapazität der Filter-Impedanz dimensioniert wird, ergeben sich die wie folgt möglichen Kapazitätswerte in Prozent des Gesamt-Kapazitätswertes aus C0 + C1 + C2:

| Kondensatorschalter 1 | Kondensatorschalter 2 | Wirksame Kapazität |
|---|---|---|
| Offen | Offen | 91% |
| Geschlossen | Offen | 94% |
| Offen | Geschlossen | 97% |
| Geschlossen | Geschlossen | 100% |

In Figuren 1-7 sind Überwachungen, beispielsweise auf Übertemperaturen in den Drosseln oder auf Stempunktunsymmetrien in den Kondensatoren, mittels punktierter Linien angedeutet. Falls auch bei der am niedrigsten einstellbaren Abstimmfrequenz Überlast eintritt, wird der Filterkreis, wie an sich bekannt, abgeschaltet, und das Steuergerät erzeugt eine Alarmmeldung (siehe "Alarm" in Figuren 1-7).

Die oben beschriebenen, erfindungsgemäßen Filterkonzepte für ein regelbares, passives Filter mit Steuer-und Regelgerät benötigen keine Stromwandler in der Einspeisung des betreffenden Netzabschnittes (was typisch für closed-loop-Steuerung wäre) und keine Stromwandler an den elektrischen Abgängen der Störer (was typisch für open-loop-Steuerung wäre). Erfindungsgemäß genügt dem Steuergerät 1 die Information über den aktuellen Eigenstrom des Filters. Entsprechend diesem sowie einem Vergleich mit der maximalen Strombelastbarkeit oder auch einer sonst vorgegebenen Führungsgröl3e für einen Filterstrom kann die Regelung im Steuergerät 1 veranlasst werden. Der Filter-Eigenstrom jedenfalls ist dem Stromkanal bzw. der Strom-Schnittstelle des Steuergerätes 1 zur Verfügung zu stellen. Alternativ hierzu oder zusätzlich ist es im Rahmen der Erfindung auch möglich, die Spannung an einer Drossel bzw. induktiven Komponente den Spannungskanälen bzw. den Spannungs-Schnittstellen des Steuergerätes 1 zur Verfügung zu stellen.

Bezugszeichen-Liste:

C0 - Kondensator, Hauptkapazität

L0 - Haupt- und Teilinduktivität

L1, ..., Ln - Teil-und Regel-Induktivität

S0 - Hauptschalter

1 - Steuergerät

W - Wahlschalter

A - Strommessung

2 - Stromwandler

S1, ..., Sn - Überbrückungsschalter, Kondensatorschalter oder Widerstandsschalter

C0 - Teil-und Hauptkapazität

C1, C2 - Teil-und Regelkapazität

Rd1, ..., Rdn - Teil-Dämpfungswiderstände

**Patentansprüche**

1. Verfahren zum Betrieb eines passiven Wechselstrom-Oberschwingungs-Filters, um Verzerrungen und/oder Oberschwingungen bzw. Harmonische einer Grundfrequenz in elektrischen Energieverteilnetzen zu reduzieren oder zu begrenzen, bei welchem Verfahren mittels Dimensionierung einer Induktivität (L0, L1,... Ln) und einer Kapazität (C0, C1,... Cn) und gegebenenfalls einer oder mehrerer Widerstände (Rd1,... Rdn) des Filters dessen Abstimmfrequenz und/oder Impedanz eingestellt werden, **dadurch gekennzeichnet, dass** während des laufenden Filter-Betriebs ohne dessen Unterbrechung je nach Strom- oder sonstiger Leistungsbelastung des Filters die Abstimmfrequenz und/oder Impedanz entsprechend einer vorgegebenen, maximalen Strom- oder sonstigen Leistungsbelastbarkeit des Filters so verändert werden, dass dessen Grenze zur Strom- oder Leistungs-Überlastung nicht überstiegen wird.

2. Verfahren nach Anspruch 1, **gekennzeichnet durch** einen vorzugsweise automatisierten Regelungsbetrieb, wobei die Filter-Strom- oder - Leistungsbelastung als Istwert erfasst werden, und die maximale Stromoder Leistungsbelastbarkeit oder eine sonstige Führungsgröße als Sollwert verwendet werden, und in Abhängigkeit eines Ergebnisses eines Soll-/Istwert-Vergleichs die Abstimmfrequenz und/oder die Impedanz verstellt werden.

3. Verfahren nach Anspruch 1 oder 2, **dadurch gekennzeichnet, dass** die Änderung der Abstimmfrequenz oder Impedanz über ein gezieltes Zuoder Abschalten, Erhöhen, Vermindern, Erniedrigen oder Kurzschließen von Wirk- und/oder Blindanteilen der Impedanz des Filters erfolgt.

**4.** Verfahren nach Anspruch 3, **gekennzeichnet durch** den Einsatz von einem oder mehreren Schaltmitteln (S0, S1... Sn), um Wirk- und/oder Blindanteile der Impedanz zu- oder abzuschalten.

**5.** Verfahren nach Anspruch 4 und 2, **dadurch gekennzeichnet, dass** die Schaltmittel (S0, S1... Sn) entsprechend des Ergebnisses des Soll-Istwert-Vergleichs angesteuert werden.

**6.** Verfahren nach einem der vorangegangenen Ansprüche, **dadurch gekennzeichnet, dass** mit zunehmenden Verzerrungen und/oder Oberschwingungen bzw. Harmonischen einer Grundfrequenz im elektrischen Energieverteilnetz die Abstimmfrequenz über Veränderung von Wirk- und/oder Blindanteilen der Filter-Impedanz derart erniedrigt und/oder die Impedanz des Filters derart verändert werden, dass ein Betrieb des Filters ohne dessen Überlastung gegeben ist.

**7.** Passives Wechselstrom-Oberschwingungs-Filter zur Reduktion oder Begrenzung von Verzerrungen und/oder Oberschwingungen bzw. Harmonischen einer Grundfrequenz in elektrischen Energieverteilnetzen, insbesondere zur Durchführung des Verfahrens nach einem der vorangehenden Ansprüche, mit einer induktive und kapazitive und gegebenenfalls ohmsche Komponenten umfassenden Schaltungsanordnung, wobei die Komponenten zur Bildung einer vorbestimmten Abstimmfrequenz und/oder Impedanz dimensioniert sind, und mit einer Regel- und Steuereinrichtung (1), **dadurch gekennzeichnet, dass** mindestens eine der induktiven und kapazitiven und gegebenenfalls ohmschen Komponenten in einzelne Teilkomponenten (L0, L1,... Ln; C0, C1, C2; Rd1... Rdn) aufgeteilt ist, welche je nach Strom- und/oder Leistungsbelastung zur Anpassung der Abstimmfrequenz und/oder Impedanz des Filters an seine vorgegebene, maximale Strom- und/oder Leistungsbelastbarkeit mittels der Regel- und Steuereinrichtung (1) selektiv aktivierbar und deaktivierbar sind, welche eine Strommess-Schnittstelle (A) aufweist, welche mit einem Stromsensor (2) für einen durch das Filter fließenden Strom verbunden ist.

**8.** Filter nach Anspruch 7, **gekennzeichnet durch** eine vorzugsweise selbsttätige Regel- und Steuereinrichtung (1), welche zur Erfassung der Strom- und/oder Leistungsbelastung des Filters als Istwert, zu dessen Vergleich mit einer maximalen Strom- und/oder Leistungsbelastbarkeit als Sollwert oder mit einer sonstigen Führungsgröße, und zur Aktivierung und Deaktivierung der Teilkomponenten selektiv entsprechend dem Vergleichsergebnis ausgebildet ist.

**9.** Filter nach Anspruch 8, **dadurch gekennzeichnet, dass** zur Erfassung der Strom- oder sonstigen Leistungsbelastung eine oder mehrere der Komponenten oder Teilkomponenten mit je einem Stromsensor oder einer Leistungsmessung gekoppelt sind, der oder die ausgangsseitig mit der Regel- und Steuereinrichtung (1) verbunden ist.

**10.** Filter nach Anspruch 9, **dadurch gekennzeichnet, dass** der Stromsensor bzw. die Leistungsmessung als nach Art eines Transformators arbeitender Strom- oder Spannungswandler (2) oder sonstiger Messwandler realisiert ist, dessen Sekundärstrom der Regel-und Steuereinrichtung (1) zur Erfassung der Strom- und/oder Leistungsbelastung zugeführt ist.

**11.** Filter nach einem der Ansprüche 7-10, **dadurch gekennzeichnet, dass** den Teilkomponenten zu ihrer Aktivierung und Deaktivierung zwecks Anpassung der Abstimmfrequenz und/oder Impedanz ein oder mehrere Schaltmittel (S1... Sn) zugeordnet sind, welche zu ihrer Ansteuerung oder Betätigung mit der Regel- und Steuereinrichtung (1) gekoppelt oder verbunden sind.

**12.** Filter nach einem der Ansprüche 7-11, **gekennzeichnet durch** eine in Serie zu zumindest einer kapazitive Komponente (C0) oder kapazitiven Teilkomponenten angeordneten Reihenschaltung mehrerer induktiver Teilkomponenten (L0, L1,... Ln), von denen zumindest ein Teil (L1,... Ln) mittels eines oder mehrerer Wahlschalter (W) oder jeweils zugeordneter Überbrückungsschalter (S1,... Sn) aktivierbar oder deaktivierbar ist, um die Abstimmfrequenz und/oder Impedanz an die maximale Stromund/oder Leistungsbelastbarkeit oder an eine sonstige Führungsgröße anzupassen.

**13.** Filter nach einem der Ansprüche 7-12, **gekennzeichnet durch** eine in Serie zu zumindest einer induktiven Komponente (L0) oder mehreren induktiven Teilkomponenten angeordnete Parallelschaltung mehrerer Teilkapazitäten (C0, C1,... Cn), von denen zumindest ein Teil mittels jeweils zugeordneter Unterbrechungsschalter (S1,... Sn) aktivierbar oder deaktivierbar ist, um die Abstimmfrequenz und/oder Impedanz an die maximale Strom- und/oder Leistungsbelastbarkeit anzupassen.

**14.** Filter nach einem der Ansprüche 7-13, **dadurch gekennzeichnet, dass** zu einer Stromdämpfung einer oder mehreren induktiven Komponenten und/oder mehreren induktiven Teilkomponenten eine oder mehrere, ohmsche Komponenten und/oder Teilkomponenten, insbesondere Dämpfungswiderstände (Rd1,... Rdn), parallel geschaltet sind, welche durch zugeordnete Dämpfungs-Unterbrechungsschalter (S1,... Sn) und/oder Dämpfungs-Überbrückungsschalter (S1, S2,... Sn) aktivierbar oder deaktivierbar sind.

**15.** Filter nach Anspruch 14, **gekennzeichnet durch** eine Parallelschaltung mehrerer ohmscher Teilkomponenten (Rd1,... Rdn), denen jeweils ein Unterbrechungsschalter (S1,... Sn) derart zugeordnet ist, dass mit einer Betätigung des jeweiligen Unterbrechungsschalters die zugeordnete ohmsche Teilkomponente zu der oder den induktiven Komponenten (L0) und/oder induktiven Teilkomponenten parallel zuschaltbar oder davon abschaltbar ist.

**16.** Filter nach Anspruch 14 oder 15, **gekennzeichnet durch** eine Reihenschaltung mehrerer ohmscher Teilkomponenten (Rd1, Rd2,... Rdn), denen jeweils ein Überbrückungsschalter (S1, S2,... Sn) derart zugeordnet ist, dass mit einer Betätigung des jeweiligen Überbrückungsschalters die zugeordnete ohmsche Teilkomponente zu der oder den induktiven Komponenten (L0) und/oder induktiven Teilkomponenten parallel zuschaltbar oder davon abschaltbar ist.

**17.** Filter nach einem der Ansprüche 7-16, **gekennzeichnet durch** eine Dimensionierung der induktiven und/oder kapazitiven Teilkomponenten der Art, dass eine der induktiven oder kapazitiven Teilkomponenten mehr als 85 % der Gesamtinduktivität bzw. der Gesamtkapazität des Filters ausmacht.

**18.** Filter nach einem der Ansprüche 7-17 **dadurch gekennzeichnet, dass** wenigstens eine der induktiven oder kapazitiven Komponenten oder Teilkomponenten (L0; C0) im Strompfad oder Stromkreis des Filters kontinuierlich wirksam gehalten und/oder ohne direkte Kopplung mit einem und/oder -Abschaltbarkeit durch ein Schaltmittel angeordnet ist.

## Claims

**1.** A method for operating a passive alternating current harmonic filter in order to reduce or to limit distortions and/or harmonics of a base frequency in electrical energy distribution networks, by means of which method, by dimensioning an inductor (L0, L1,... Ln) and a capacitor (C0, C1,... Cn) and optionally one or more resistors (Rd1,... Rdn) of the filter, the tuning frequency and/or impedance of the latter are set, **characterised in that** during on-going filter operation, and without interrupting the latter, dependently upon on the current or other power loading of the filter, the tuning frequency and/or impedance are changed according to a pre-specified, maximum current or other power load capacity of the filter such that its limit for current or power overloading is not exceeded.

**2.** The method according to Claim 1, **characterised by** a preferably automated control operation, the filter current or power loading being recorded as an actual value, and the maximum current or power load capacity or some other reference variable being used as a target value, and the tuning frequency and/or the impedance being adjusted dependently upon a result of a target/actual value comparison.

**3.** The method according to Claim 1 or 2, **characterised in that** the change to the tuning frequency or impedance takes place by means of specific connection or disconnection, increasing, reducing, lowering or shorting active and/or reactive components of the filter impedance.

**4.** The method according to Claim 3, **characterised by** the use of one or more switching means (S0, S1... Sn) in order to connect or disconnect active and/or reactive components of the impedance.

**5.** The method according to Claims 4 and 2, **characterised in that** the switching means (S0, S1... Sn) are actuated according to the result of the target/actual value comparison.

**6.** The method according to any of the preceding claims, **characterised in that** as distortions and/or harmonics of a base frequency increase in the electrical energy distribution network, the tuning frequency is lowered by changing active and/or reactive components of the filter impedance and/or the impedance of the filter is changed such that operation of the filter is provided without being overloaded.

**7.** A passive alternating current harmonic filter for reducing or limiting distortions and/or harmonics of a base frequency in electrical energy distribution networks, in particular for implementing the method according to any of the preceding claims, with a circuit arrangement comprising inductive and capacitive and optionally ohmic components, the components being dimensioned to form a pre-determined tuning frequency and/or impedance, and with a regulating and control device (1), **characterised in that** at least one of the inductive and capacitive and optionally ohmic components is divided up into individual sub-components (L0, L1,... Ln; C0, C1, C2; Rd1... Rdn) which can be selectively activated and deactivated dependently upon the current and/or power loading in order to adapt the tuning frequency and/or impedance of the filter to its pre-specified, maximum current and/or power load capacity by means of the regulating and control device (1) which has a current measuring interface (A) which is connected to a current sensor (2) for a current flowing through the filter.

8. The filter according to Claim 7, **characterised by** a preferably automatic regulating and control device (1) which is designed to record the current and/or power loading of the filter as an actual value, for comparison with a maximum current and/or power load capacity as a target value, or with some other reference value, and for activating and deactivating the sub-components selectively according to the comparison result.

9. The filter according to Claim 8, **characterised in that** in order to record the current or other power loading, one or more of the components or sub-components are coupled to a respective current sensor or a power measurement that is connected on the output side to the regulating and control device (1).

10. The filter according to Claim 9, **characterised in that** the current sensor or the power measurement is realised as a current or voltage converter (2) working in the manner of a transformer or as some other measurement converter, the secondary current of which is delivered to the regulating and control device (1) in order to record the current and/or power loading.

11. The filter according to any of Claims 7-10, **characterised in that** one or more switching means (S1... Sn) are assigned to the sub-components so that the latter can be activated or deactivated for the purpose of adapting the tuning frequency and/or impedance, which switching means are coupled or connected to the regulating and control device (1) for actuation or activation.

12. The filter according to any of Claims 7-11, **characterised by** a series circuit comprising a number of inductive sub-components (L0, L1,... Ln) arranged in a series to form at least one capacitive component (C0) or capacitive sub-components, at least some of which inductive sub-components (L1,... Ln) can be activated or deactivated by means of one or more selector switch/es (W) or respectively assigned bypass switches (S1,... Sn) in order to adapt the tuning frequency and/or impedance to the maximum current and/or power load capacity or to some other reference variable.

13. The filter according to any of Claims 7-12, **characterised by** a parallel circuit comprising a number of sub-capacitors (C0, C1,... Cn) arranged in a series to form at least one inductive component (L0) or a number of inductive sub-components, of which sub-capacitors at least some can be activated or deactivated by means of respectively assigned break switches (S1,... Sn) in order to adapt the tuning frequency and/or impedance to the maximum current and/or power load capacity.

14. The filter according to any of Claims 7-13, **characterised in that** one or more ohmic components and/or sub-components, in particular damping resistors (Rd1,... Rdn), are connected in parallel to form current attenuation of one or more inductive components and/or a number of inductive sub-components, which ohmic components and/or sub-components can be activated or deactivated by assigned attenuation break switches (S1,... Sn) and/or attenuation bypass switches (S1, S2,... Sn).

15. The filter according to Claim 14, **characterised by** a parallel circuit of a number of ohmic sub-components (Rd1,... Rdn), to which a break switch (S1,... Sn) is respectively assigned such that by activating the respective break switch, the assigned ohmic sub-component can be connected to or can be disconnected from the inductive component or components (L0) and/or inductive sub-components in parallel.

16. The filter according to Claim 14 or 15, **characterised by** a series circuit of a number of ohmic sub-components (Rd1, Rd2,... Rdn) to which a bypass switch (S1, S2, ... Sn) is respectively assigned such that by activating the respective bypass switch, the assigned ohmic sub-component can be connected to or can be disconnected from the inductive component or components (L0) and/or inductive sub-components in parallel.

17. The filter according to any of Claims 7-16, **characterised by** dimensioning of the inductive and/or capacitive sub-components of the type such that one of the inductive or capacitive sub-components makes up more than 85% of

### EP 3 065 247 B1

the total inductivity or of the total capacity of the filter.

18. The filter according to any of Claims 7-17, **characterised in that** at least one of the inductive or capacitive components or sub-components (L0; C0) is kept so as to be continuously active in the current path or current circuit of the filter and/or is arranged without direct coupling to a and/or can be disconnected by a switching means.

**Revendications**

1. Procédé pour le fonctionnement d'un filtre passif d'harmoniques de courant alternatif, pour réduire ou limiter les distorsions et/ou les harmoniques telles que les harmoniques d'une fréquence fondamentale dans les réseaux de distribution d'énergie électrique, par lequel procédé on peut régler la fréquence d'accord et/ou l'impédance du filtre au moyen du dimensionnement d'une inductance (L0, L1, ... Ln) et d'une capacité (C0, C1, ... Cn) et éventuellement d'une ou plusieurs résistances (Rd1, ... Rdn) du filtre, **caractérisé en ce que,** pendant le fonctionnement du filtre sans interruption, en fonction du courant ou autre facteur de charge du filtre on règle la fréquence d'accord et/ou l'impédance en fonction d'une capacité maximale donnée du filtre en courant ou en puissance de charge, de façon que sa limite de surcharge en courant ou en puissance ne soit pas dépassée.

2. Procédé selon la revendication 1, **caractérisé par** un mode de commande de préférence automatique, par lequel le courant ou la puissance de charge du filtre est détecté comme valeur réelle, et la capacité maximale en courant ou en puissance de charge ou une autre variable de référence est utilisée comme valeur de consigne, et on règle la fréquence d'accord et/ou l'impédance en fonction du résultat de la comparaison entre la valeur réelle et la consigne.

3. Procédé selon la revendication 1 ou 2, **caractérisé en ce que** le changement de la fréquence d'accord ou de l'impédance est réalisé par une connexion ou une déconnection, une augmentation, une réduction, une diminution ou une mise en court-circuit de parties actives et/ou réactives de l'impédance du filtre.

4. Procédé selon la revendication 3, **caractérisé par** l'utilisation d'un ou plusieurs moyens de commutation (S0, S1, Sn) pour connecter ou déconnecter des composantes actives et/ou réactives de l'impédance.

5. Procédé selon les revendications 4 et 2, **caractérisé en ce que** les moyens de commutation (S0, S1, ... Sn) sont commandés en fonction du résultat de la comparaison entre la valeur réelle et la consigne.

6. Procédé selon l'une quelconque des revendications précédentes, **caractérisé en ce que**, en cas d'une augmentation des distorsions et/ou des harmoniques telles que les harmoniques d'une fréquence fondamentale dans le réseau de distribution d'énergie électrique, la fréquence d'accord est réduite par la modification des composantes actives et/ou réactives de l'impédance du filtre de telle sorte, et/ou l'impédance du filtre est modifiée de telle sorte, que le fonctionnement du filtre est assuré sans surcharge.

7. Filtre passif d'harmoniques de courant alternatif, pour réduire ou limiter les distorsions et/ou les harmoniques telles que les harmoniques d'une fréquence fondamentale dans les réseaux de distribution d'énergie électrique, en particulier pour la mise en oeuvre du procédé selon l'une des revendications précédentes, avec un circuit comprenant des composants inductifs, capacitifs et éventuellement ohmiques, dans lequel les composants sont dimensionnés de façon à réaliser une fréquence d'accord et/ou une impédance prédéterminée, et avec un dispositif de réglage et de commande (1), **caractérisé en ce que** l'un au moins des composants inductifs et capacitifs et éventuellement ohmiques est divisé en des sous-composants individuels (L0, L1, ... Ln ; C0, C1, C2 ; Rd1, ... Rdn), lesquels peuvent être sélectivement activés et désactivés au moyen du dispositif de réglage et de commande (1) en fonction de la charge de courant et/ou de puissance pour ajuster la fréquence d'accord et/ou l'impédance du filtre à sa capacité maximale prédéterminée en courant et/ou en puissance, lequel comprend une interface de mesure du courant (A) qui est reliée à un capteur de courant (2) pour un courant traversant le filtre.

8. Filtre selon la revendication 7, **caractérisé par** un dispositif de régulation et de commande (1) de préférence automatique, lequel est conformé pour détecter la charge en courant et/ou en puissance du filtre en tant que valeur réelle, pour la comparer avec une capacité maximale en courant et/ou en puissance en tant que consigne ou avec une autre variable de référence, et pour activer ou désactiver les sous composants individuels de façon sélective en fonction de la comparaison.

9. Filtre selon la revendication 8, **caractérisé en ce que** pour la détection du courant ou d'un autre facteur de charge,

**13**

un ou plusieurs des composants ou des sous-composants individuels sont couplés chacun avec un capteur de courant ou un dispositif de mesure de puissance, l'un ou l'autre étant connecté à sa sortie au dispositif de réglage et de commande (1).

**10.** Filtre selon la revendication 9, **caractérisé en ce que** le capteur de courant ou le dispositif de mesure de puissance est réalisé sous forme d'un transformateur (2) fonctionnant en convertisseur de courant ou de tension ou d'un autre dispositif de mesure, dont le courant secondaire est fourni au dispositif de réglage et de commande (1) pour détecter le courant et/ou le facteur de charge.

**11.** Filtre selon l'une des revendications 7 à 10, **caractérisé en ce que** les sous-composants individuels sont associés à un ou plusieurs moyens de commutation (S1, ... Sn) pour leur activation et leur désactivation dans le but de régler la fréquence d'accord et/ou l'impédance, lesquels sont couplés ou liés au dispositif de réglage et de commande (1) pour leur conduite ou leur actionnement.

**12.** Filtre selon l'une des revendications 7 à 11, **caractérisé par** la connexion en série d'au moins un composant capacitif (C0), ou de sous-composants individuels capacitifs connectés en série, avec plusieurs sous-composants individuels inductifs (L0, L1, ... Ln), dont au moins une portion (L1, ... Ln) peut être activée ou désactivée au moyen d'un ou plusieurs sélecteurs (W) ou de commutateurs de dérivation respectifs associés (S1, ... Sn), afin d'ajuster la fréquence d'accord et/ou l'impédance en fonction de la capacité maximale en courant et/ou en puissance ou en fonction d'une autre variable de référence.

**13.** Filtre selon l'une des revendications 7 à 12, **caractérisé par** la connexion en série d'au moins un composant inductif (L0), ou de plusieurs composants inductifs individuels agencés en parallèle, avec plusieurs composants capacitifs individuels (C0, C1,... Cn) dont au moins une partie peut être activée ou désactivée au moyen d'un commutateur série associé (S1,... Sn), afin d'ajuster la fréquence d'accord et/ou l'impédance en fonction de la capacité maximale en courant et/ou en puissance.

**14.** Filtre selon l'une des revendications 7 à 13, **caractérisé en ce que**, pour une atténuation de courant d'un ou plusieurs composants inductifs et/ou de plusieurs sous-composants individuels inductifs, on connecte en parallèle un ou plusieurs composants et/ou sous-composants individuels ohmiques, en particulier des résistances d'amortissement (Rd1, ... Rdn), lesquels peuvent être activés ou désactivés au moyen de commutateurs série d'amortissement (S1,... Sn) et/ou de commutateurs parallèles d'amortissement (S1, S2, ... Sn).

**15.** Filtre selon la revendication 14, **caractérisé par** une connexion en parallèle de plusieurs sous-composants individuels ohmiques (Rd1,... Rn), dont chacun est associé à un commutateur série (S1, ... Sn) de manière que, par un actionnement du commutateur série respectif, le sous-composant individuel ohmique associé soit connecté en parallèle au(x) composant(s) inductif(s) (L0) et/ou au(x) sous-composant(s) individuel(s) inductif(s) ou soit déconnecté de ceux-ci.

**16.** Filtre selon la revendication 14 ou 15, **caractérisé par** un circuit en série d'une pluralité de sous-composants individuels ohmiques (Rd1, Rd2, ... Rdn), ayant chacun un commutateur de dérivation (S1, S2, ... Sn) agencé de manière que, par un actionnement du commutateur de dérivation respectif, le sous-composant ohmique associé soit connecté en parallèle au(x) composant(s) inductif(s) (L0) et/ou au(x) sous-composant(s) individuel(s) inductif(s) ou soit déconnecté de ceux-ci.

**17.** Filtre selon l'une des revendications 7 à 16, **caractérisé par** un dimensionnement des sous-composants individuels inductifs et/ou capacitifs de telle sorte que l'un des composants individuels inductifs ou capacitifs représente au moins 85 % de l'inductance totale ou de la capacité totale du filtre.

**18.** Filtre selon l'une des revendications 7 à 17, **caractérisé en ce que** au moins l'un des composants ou sous-composants individuels inductifs ou capacitifs (L0 ; C0) est maintenu actif en permanence dans le trajet de courant ou circuit du filtre et/ou sans couplage direct avec une activation et/ou une désactivation au moyen d'un moyen de commutation.

Figur 1

Figur 2

Figur 3

Figur 4

Figur 5

Figur 6

Netz

Steuerung

S0

2

L0

Steuer-gerät

A

Alarm

1

Überwachung

Steuerung

S1

S2

C0    C1    C2

Figur 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20050024131 A1, Lazar
- DE 102012216266 A1

- US 5406437 A, LEVIN MICHAEL I.
- US 20120182089 A1, Liang

**In der Beschreibung aufgeführte Nicht-Patentliteratur**

- passive und aktive Filteranlagen. Blindleistungskompensation - Netzqualität. VDE-Verlag, 2009
- Application of neural networks to predicting harmonics. **LAI LL et al.** EPE, 95: 6th. EUROPEAN CONFERENCE ON POWER ELCTRONICS AND APPLICATIONS. EPE association, 19. September 1995, vol. 3, 3533-3538

- Betriebsanleitung für Mittelspannungs-Produkte. Hans von Mangold GmbH und Co,